# EUROPEAN PATENT APPLICATION

(11) **EP 0 740 898 A2**
(43) Date of publication of application: **06.11.1996**
(21) Application number: 96201227.4
(22) Date of filing: 03.05.1996
(51) Int. Cl.: A01D 34/66

(54) **Apparatus for cultivating agricultural crops with folding frame**

(30) Priority: 04.05.1995 NL 1000301
(71) Applicant: Greenland Nieuw-Vennep B.V., NL-2153 LR Nieuw-Vennep (NL)
(72) Inventor: Vissers, Hermanus Hendrik, 2451 ZS Leimuiden (NL)
(74) Representative: Hoorweg, Petrus Nicolaas

(57) **Abstract**

Apparatus for cultivating agricultural crops such as grass, comprising a frame pulled forward over the field and supported by at least two running wheels (8), a crop tilling means carried by the frame and a pulling member connected to the frame, wherein the tilling means is height-adjustable relative to the frame, wherein on the one hand the frame consists of a first part (2) connected to the pulling member and a second part (3) connected to the running wheels, which parts are coupled to each other for mutual pivoting on a lying pivot axis (AA), wherein an adjusting means, for instance a cylinder (13), acts between the two parts to adjust the angular position between the two parts in the vertical plane, and on the other hand a separating screen (40) is arranged above the crop tilling means embodied as mower beam (31).

## Description

The invention relates to an apparatus for cultivating agricultural crops such as grass, comprising a frame pulled forward over the field and supported by at least two running wheels, a crop tilling means carried by the frame and a pulling member connected to the frame, wherein the tilling means is height-adjustable relative to the frame.

Such an apparatus is normally equipped with running wheels which are adjustable relative to the frame, which requires a relatively complicated wheel suspension.

Such a height adjustment is necessary to place the crop tilling means at a sufficient height during transport by road.

The invention has for its object to embody the apparatus such that this height adjustment can be made more simply.

The apparatus according to the invention is distinguished in that the frame consists of a first part connected to the pulling member and a second part connected to the running wheels, which parts are coupled to each other for mutual pivoting on a lying pivot axis, wherein an adjusting means, for instance a cylinder, acts between the two parts to adjust the angular position between the two parts in the vertical plane.

Because only the angular adjustment between the two parts of the frame must be controlled by an adjusting means, for instance a cylinder, one cylinder can suffice to simultaneously carry both running wheels to the correct height setting.

It is recommended to embody the apparatus such that each of the two parts of the frame have at least one standing stop surface, of which two co-act in each case as a pair, wherein the pivot axis is situated beneath the stop surfaces and the adjusting means can be a single or double-action pressure cylinder.

With this embodiment the operating position is automatically obtained by making the adjusting cylinder pressureless, whereby under the influence of gravity the frame parts support on each other via the co-acting pressure stop surfaces, which simplifies the embodiment still further.

In a further embodiment wherein the tilling means, for instance the mower beam, is suspended from the frame part for adjustment vertically up and downward via at least one pivoting lever, it is recommended according to the invention to provide at least one pivoting lever with a pressure surface which is arranged above the pivot point with the first frame part and which co-acts with a counter-pressure surface arranged on the first frame part, wherein the adjusting means is arranged pivotally between the pivoting lever and the second frame part.

Due to this arrangement of the adjusting means and the pivot points of the tilling means it is possible with for instance one cylinder to adjust in height both the crop tilling means and the two parts of the frame itself for which the angular adjustment is important.

The invention further relates to an apparatus for cultivating agricultural crops such as grass, comprising a frame pulled forward over the field, a mower beam supported by the frame and having rotatably driven mowing members, and a pulling member connected to the frame.

In such apparatus it is important to place the mown grass in a relatively narrow swath. Many proposals to this end have already been made in the past to bring the swath into the correct form with air flow or guide members.

The invention has for its object to improve the crop guiding such that a narrower swath than heretofore is obtained in which the swath is also heaped higher.

This is achieved according to the invention by an apparatus which is distinguished in that in or close to the middle of the mower beam a standing separating surface is arranged which in the direction of movement extends rearward beyond the mowing range of the mowing members.

The outer mowing members are herein preferably provided with a rotatably driven drum around which is arranged a standing, bent crop guiding screen. This results in an improved air flow which flings the crop from the outer mowing members against the standing separating surface whereby the desired swath section is more easily obtained.

In a preferred embodiment the separating surface is formed by a flexible screen suspended loosely on the upper part of the frame.

Above mentioned and other features of the invention are further elucidated in the figure description hereinbelow of an embodiment. In the drawing:
fig. 1 shows a perspective rear view of an agricultural apparatus according to the invention provided with a frame consisting of two parts and a separating surface for forming a swath,
fig. 2a, b, c and d show in each case a side view of the agricultural apparatus of fig. 1 in four different positions,
fig. 3 is a perspective front view of a mower beam with rotating mowing members, which mower beam is suspended in a random agricultural apparatus, for instance that of fig. 1.

Designated in the figures with the numeral 1 is the frame of the apparatus, which frame consists according to the invention of a first front part 2 and a second rear part 3.

The front part 2 is provided with a drawbar 4 which is pivotable on the pivot pin 5 in the horizontal plane relative to the front beam of frame 2. The angular adjustment can take place with a hydraulic cylinder 6. The rear part 3 of the frame is provided with two wheel arms 7 which are fixedly mounted thereto and on the bottom end of which a running wheel 8 is arranged in each case. Wheel arms 7 are mutually connected by a cross beam 9.

The second frame part is thus formed by two practically vertically standing elements 3' to which wheel arms 7 are fixedly mounted and the fixed cross beam 9 lying therebetween.

The bottom end of frame parts 3' are pivotally connected to hinge plates 10 of the front frame part 2. The pivot axis A-A runs horizontally.

Stop surfaces 11, 12 are arranged on the front frame part 2 respectively rear frame part 3' above this horizontally positioned pivot axis A-A.

The angular adjustment between the first and second frame part 2, 3 respectively takes place with two hydraulic cylinders 13, of which the one cylinder end is connected hingedly at 14 to the cross beam 9 of the rear frame part. The operation of this angular adjustment is further elucidated hereinbelow.

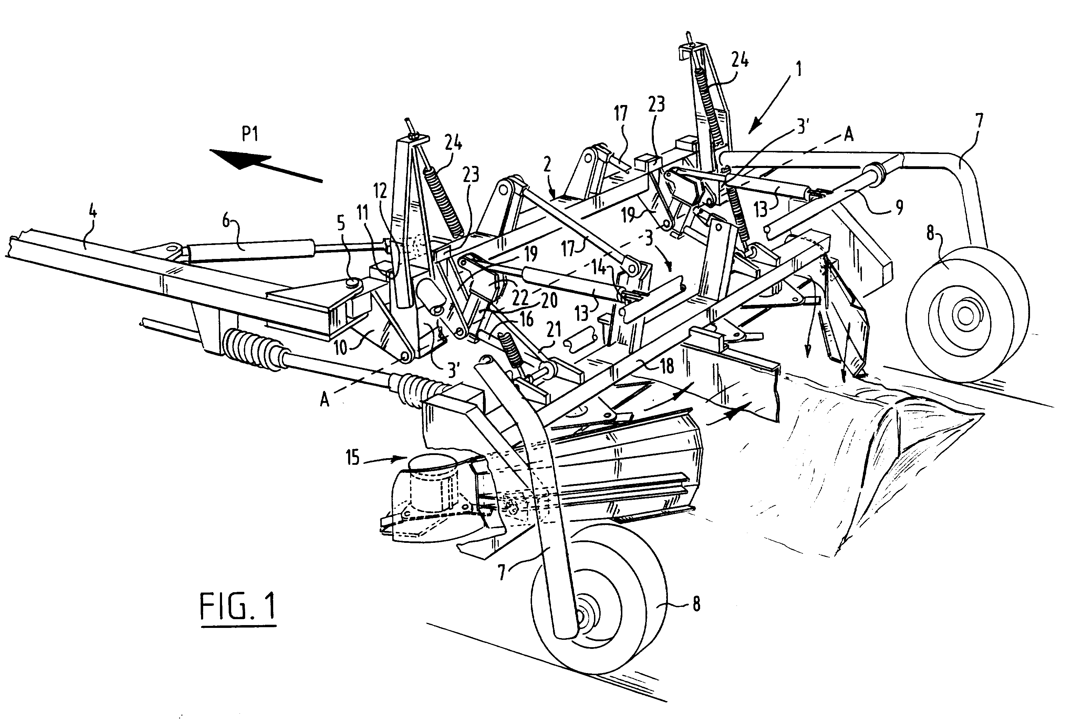

The agricultural apparatus shown in fig. 1 is embodied as a mower, i.e. a mowing device 15 is suspended from the frame 2, 3. This suspension takes place with two adjacently placed parallel guides, each consisting of a lower parallel arm 16 and an upper parallel arm 17 which are both connected hingedly to the front frame part 7 and to the sub-frame 8 of the mower. It is noted here that the front cross beam 2 of the front frame part is provided adjacently of the hinge plates 10 with two further hinge plates 19, to the lower end of which the lower parallel arm 16 is hingedly connected. The pivot point coincides with the pivot axis A-A between the front and the rear frame parts 2, 3 respectively.

The lower parallel arm 16 or lifting arm is provided at the front pivot point with an arm 20 lying perpendicularly thereof, wherein a bracing arm 21 functions as stiffening. On the top end the arm 20 is embodied with hinge plates 22 between which the eye of the piston rod of cylinder 13 is pivotally received.

Hinge plates 22 have an L-shaped form, wherein the end can strike against a second stop surface 23 on the cross beam of the front frame part 2.

Finally, it is mentioned that a compensation draw spring 24 is arranged between frame part 3' and cross beam 18 of the sub-frame of the mowing member in order to compensate the weight of the mowing device.

The possibilities of adjusting the mowing device 15 relative to the front and rear frame parts 2, 3 and the angular setting between these two frame parts is now elucidated further.

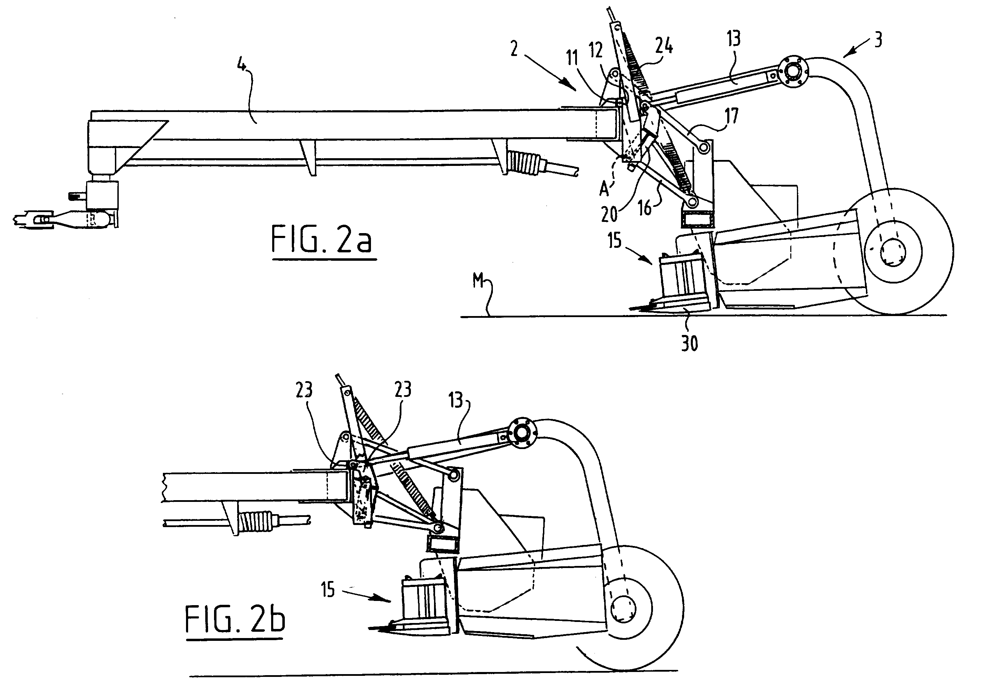

Starting in the active position of fig. 2a the cylinder 13 is pressureless and due to the weight of the frame parts 2, 3 the pivot point A will drop downward under the influence of gravity, wherein the stop surfaces 11, 12 lie against each other. The mowing device 15 likewise drops downward until the slide shoes 30 thereof slide over the ground surface M, wherein the earth pressure is determined by the bias of the compensation spring 24. Due to the parallel guiding 16, 17 the mowing device 15 is herein movable freely up and downward and can follow the contours of ground surface M.

It is noted that the lower parallel arm 16 pivots so far downward that the arm 20 fixedly connected thereto respectively the head of the L-shaped plates 22 lie clear of the stop surface 23 on the front frame part.

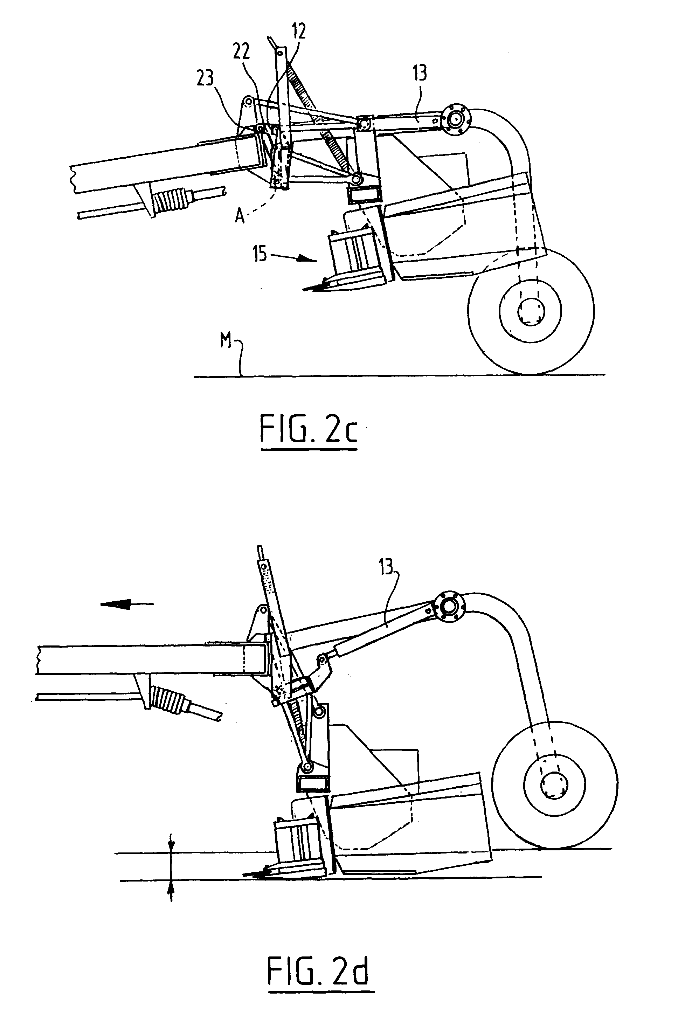

If the mowing device 15 has to be lifted from ground level M, for instance for turning operations, the cylinder 13 is then energized until the L-shaped hinge plates 22 come up against the stop surface 23, see fig. 2b. The agricultural apparatus can thus be moved forward over the field in the direction of arrow P1 in fig. 1 or to the left in figures 2.

If it is desired to raise the mowing device 15 still further, for instance for the road position or non-operational position of the agricultural apparatus, the cylinder 13 is energized still further whereby the L-shaped hinge plates 22 are pressed against the stop surface 23, which results in an angular displacement between the front and rear frame part such that the stop surfaces 11, 12 move away from each other because the frame part 3' is displaced round the pivot axis A-A relative to the front frame part 2. This step is shown in fig. 2c, which shows clearly that the height of mowing device 15 above ground level M is increased.

Setting the apparatus into operation again in the mowing position takes place in reverse sequence by relieving the cylinders 13.

Fig. 2d shows the situation in which the mowing device 15 can drop below ground level, for instance into recessed parts thereof, in order to be able to follow the contour line of the ground surface as elucidated in the position of fig. 2a.

In this embodiment it is apparent that the whole construction is considerably simplified and that the same set of cylinders 13 can be used both to set the angle between the two frame parts of the apparatus and to cause the mowing device to move up and downward.

There now follows a description of the mowing device in the form of a mower beam provided with rotating mowing members, in particular cutter discs.

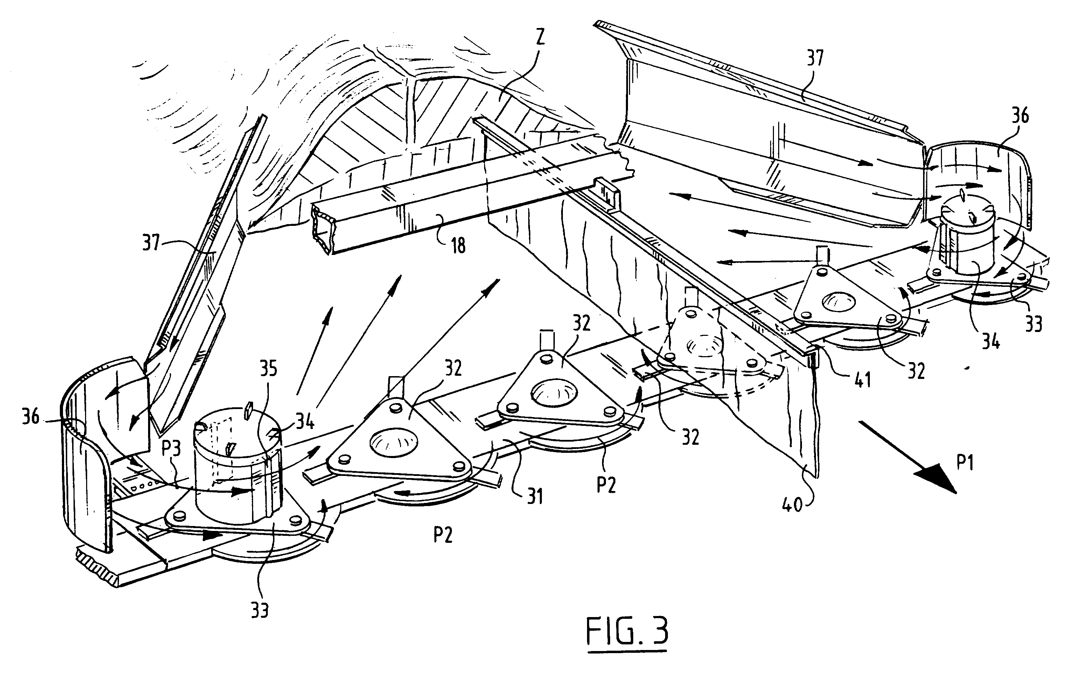

Shown in fig. 3 is such a mower beam which can be of random construction but comprises a housing 31 in which is accommodated a transmission for causing rotation of the cutter discs 32 arranged on top of housing 31. In fig. 3 are shown six cutter discs which, due to transmission 4, rotate alternatingly in opposing direction, see arrows P2.

Assuming that the mower beam is pulled forward in the direction of the arrow P1, the outer mowing members 33 rotate to the inside at the front as seen in top view. These outer mowing members are moreover provided with a drum or hat-like elevation 34, along the periphery of which are arranged means 35 for generating an air flow in the direction of arrow P3. Falling within the scope of the invention is any suitable form of the drum, for instance cylindrical or conical, standing or turned over, for enhancing the desired air flow. This air flow is guided by baffle plates 36 extending at a distance from the hat-like part 34. Arranged on the rear side of these plates 36 are crop guide plates 37 which point toward each other in order to carry into a narrowed swath the mown grass resulting from the rotation of the cutting members 38 and the forward movement of mower beam 31 over the field in the direction of the arrow P1.

It has been found in practice that this swath-forming does not function optimally because the flinging action of the hat-like parts 34 is so great that the desired swath structure is disturbed.

Arranged according to the invention in or close to the middle of mower beam 31 is a separating surface 40 which prevents the crop cut off on the one side from being flung too far to the other side of the mower beam.

This separating surface 40 is preferably embodied as a loose-hanging screen which is only fixed at the top at 41 to an L-shaped profile which extends in the direction of forward movement P1 and which is fixed close to the middle of the mower beam to the frame beam, for instance 18, lying thereabove.

Due to this loose-hanging screen 40 the lower part of the swath will be formed by the crop mown by the inner mowing members on either side of the screen 40, wherein the two pairs of outer mowing members carry the mown crop to the inside, inter alia as a result of the generated air flow, and fling it against screen 40. Outside the action of the air flow this crop falls settles the lower part and thus forms a relatively high and narrow swath Z, see fig. 3.

The maximum length of screen 40, as seen in the direction of forward movement P1, can be determined experimentally but will in any case have to extend somewhat in front of the mower beam 31 and up to several times this distance behind it.

Other embodiments are possible within the scope of the invention.

The apparatus can thus also be embodied with only one adjusting cylinder for setting the angle of the frame parts or with separate cylinders to cause lifting of the crop cultivating means, for instance mower beam, relative to the frame. The loose-hanging apron 40 can be replaced by a stiff plate and, finally, the mower beam shown in fig. 3 can be replaced by other mowing members and/or cutting members.

## Claims

1. Apparatus for cultivating agricultural crops such as grass, comprising a frame pulled forward over the field and supported by at least two running wheels, a crop tilling means carried by the frame and a pulling member connected to the frame, wherein the tilling means is height-adjustable relative to the frame, **characterized in that** the frame consists of a first part connected to the pulling member and a second part connected to the running wheels, which parts are coupled to each other for mutual pivoting on a lying pivot axis, wherein an adjusting means, for instance a cylinder, acts between the two parts to adjust the angular position between the two parts in the vertical plane.

2. Apparatus as claimed in claim 1, **characterized in** that each of the two parts of the frame has at least one standing stop surface, of which two co-act in each case as a pair, wherein the pivot axis is situated beneath the stop surfaces.

3. Apparatus as claimed in claim 1, wherein the tilling means is coupled to the frame via one or more levers pivotable in the vertical plane for height adjustment of the tilling means, **characterized in that** at least one pivoting lever is provided with a pressure surface which is arranged above the pivot point with the first frame part and which co-acts with a counter-pressure surface arranged on the first frame part, wherein the adjusting means is arranged pivotally between the pivoting lever and the second frame part.

4. Apparatus as claimed in claim 3, **characterized in** that the pivot axis of the two frame parts and that of the pivoting lever coincide.

5. Apparatus for cultivating agricultural crops such as grass, comprising a frame pulled forward over the field, a mower beam supported by the frame and having rotatably driven mowing members, and a pulling member connected to the frame, **characterized in that** in or close to the middle of the mower beam a standing separating surface is arranged which in the direction of movement extends rearward beyond the mowing range of the mowing members.

6. Apparatus as claimed in claim 5, **characterized in that** the outer mowing members are provided with a rotatably driven cylindrical or conical drum around which a standing, bent crop guiding screen is fixedly arranged.

7. Apparatus as claimed in claim 6, **characterized in that** as seen in top view the outer mowing members rotate toward each other at the front.

8. Apparatus as claimed in claims 5-7, **characterized in that** the separating surface is formed by a flexible, loosely suspended screen.
